Europäisches Patentamt

European Patent Office

Office européen des brevets

(11) Publication number : **0 415 341 B1**

# EUROPEAN PATENT SPECIFICATION

(45) Date of publication of patent specification :
**19.01.94 Bulletin 94/03**

(51) Int. Cl.[5] : **C03B 37/018**

(21) Application number : **90116464.0**

(22) Date of filing : **28.08.90**

(54) Method for producing porous glass preform for optical fiber.

(30) Priority : **28.08.89 JP 218599/89**

(43) Date of publication of application :
**06.03.91 Bulletin 91/10**

(45) Publication of the grant of the patent :
**19.01.94 Bulletin 94/03**

(84) Designated Contracting States :
**DE ES FR GB IT NL SE**

(56) References cited :
**US-A- 4 406 684
US-A- 4 801 322
PATENT ABSTRACTS OF JAPAN, unexamined
applications, C field, vol. 12, no. 132,April 22,
1988 THE PATENT OFFICE JAPANESE GOV-
ERNMENT page 75 C 490
PATENT ABSTRACTS OF JAPAN, unexamined
applications, C field, vol. 12, no. 191,June 3,
1988 THE PATENT OFFICE JAPANESE GOV-
ERNMENT page 112 C 501**

(73) Proprietor : **SUMITOMO ELECTRIC
INDUSTRIES, LTD.
5-33, Kitahama 4-chome, Chuo-ku
Osaka-shi, Osaka 541 (JP)**

(72) Inventor : **Ohga, Yuichi, c/o Yokohama Works
of Sumitomo
Electric Industries Ltd. 1, Taya-cho, Sakae-ku
Yokohama-shi, Kanagawa-ken (JP)**
Inventor : **Danzuka, Toshio, c/o Yokohama
Works of Sumitomo
Electric Industries Ltd. 1, Taya-cho, Sakae-ku
Yokohama-shi, Kanagawa-ken (JP)**
Inventor : **Kanamori, Hiroo, c/o Yokohama
Works of Sumitomo
Electric Industries Ltd. 1, Taya-cho, Sakae-ku
Yokohama-shi, Kanagawa-ken (JP)**
Inventor : **Yokota, Hiroshi, c/o Yokohama
Works of Sumitomo
Electric Industries Ltd. 1, Taya-cho, Sakae-ku
Yokohama-shi, Kanagawa-ken (JP)**

(74) Representative : **Hansen, Bernd, Dr.
Dipl.-Chem. et al
Hoffmann, Eitle & Partner Patent- und
Rechtsanwälte, Postfach 81 04 20
D-81904 München (DE)**

## Description

BACKGROUND OF THE INVENTION

Field of the Invention

The present invention relates to a method for producing a porous glass preform for use in the fabrication of an optical fiber (herein after referred to as "porous preform").

Description of the Related Art

Known methods for producing a preform for use in the fabrication of a quartz base optical fiber include the inside chemical vapor deposition (CVD) method, the OVD method and the VAD method.

For example, the VAD method is suitable for economically producing a preform for use in the fabrication of an optical fiber having low transmission loss, an arbitrary refractive index profile in the diameter direction and a homogeneous composition in the peripheral and lengthwise directions.

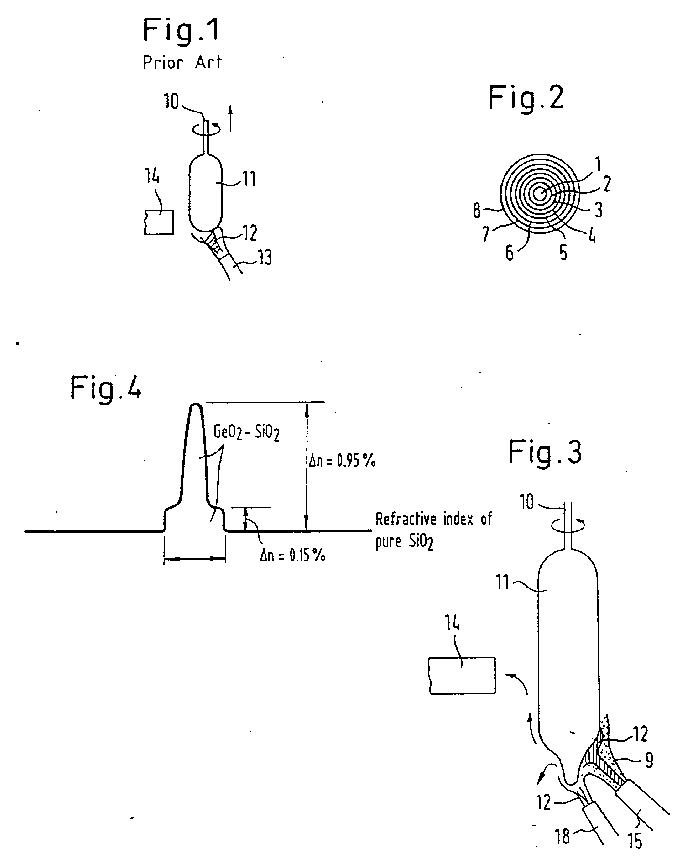

Fig. 1 shows a conventional embodiment of the VAD method for producing a quartz base preform. The porous preform 11 is grown from the lower end of a rotating starting member 10 with a soot stream 12 generated by an oxyhydrogen burner 13. An exhausting tube 14 removes undeposited soots.

For example, a multi-port burner having a cross section shown in Fig. 2 is used as the oxyhydrogen burner 13, and a glass-forming raw material is supplied from the center port 1, hydrogen gas ($H_2$) is supplied from second and sixth ports 2 and 6, oxygen gas ($O_2$) is supplied from fourth and eighth ports, and argon gas (Ar) is supplied from third, fifth and seventh ports (namely, in the order of hydrogen, argon, oxygen, argon, hydrogen, argon and oxygen) to generate a double-layer flame. In the oxyhydrogen flame, the glass-forming raw material is flame hydrolyzed to generate glass soot particles. Then, the glass soot particles are deposited on the lower end of the rotating starting member 10 such as a glass rod, and a cylinder-form mass of glass soot particles, namely the porous preform 11 is grown in the direction of the axis of the starting member 10. Thereafter, the porous preform is heated and consolidated to obtain a transparent glass preform.

By the above VAD method, it is easy to produce a large size preform with good productivity. Therefore, the VAD method is widely used in the optical fiber industry.

In the above VAD method which utilizes the double-layer flame and produces a porous preform having a desired refractive index profile at a high production rate, if the glass-forming raw material contains a compound such as $GeCl_4$ which is added to the porous preform in the form of $GeO_2$, a layer containing $GeO_2$ at a high concentration is formed on the surface of the porous preform, and the surface of the sintered preform which is obtained by heating and vitrifying the porous preform tends to be cracked due to difference of coefficients of thermal expansion between the inside and the surface of the preform.

The Table below shows the relationship between the $GeO_2$ concentration at the surface of the porous preform and cracks of the sintered preform. As seen from the Table, the $GeO_2$ concentration at the surface of the porous preform should be not larger than 5.0 % by weight.

Table

| $GeO_2$ concentration at the surface of porous preform | Condition of sintered preform |
|---|---|
| 5.0 % by weight | Good |
| 15.0 % by weight | A few cracks are formed on the surface |
| 21.0 % by weight | The surface layer is peeled off |

US-A-4801322 discloses a multi-flame burner which includes an inner central orifice and an outer orifice for supplying glass raw materials. Interposed between the orifices are a plurality of flame forming orifices which

form a plurality of flames. Such an arrangement allows different raw materials to be supplied to different parts of the burner flame. In one particular embodiment, the multi-flame burner is used to produce a preform in which $SiCl_4$ and $GeCl_4$ are supplied to an inner burner as raw materials for synthesizing the core whereas $SiCl_4$ is supplied to an outer burner for synthesizing the cladding.

## SUMMARY OF THE INVENTION

An object of the present invention is to provide an improved VAD method for producing a porous preform, which does not suffer from the above drawbacks.

According to the present invention, there is provided a method for producing a porous preform for use in the fabrication of an optical fiber with at least two burners for synthesizing glass soot particles at least one of which generates a double-layer flame and at least one of which is used for forming a core part of the preform; the method comprising the steps of:

supplying $SiCl_4$ and $GeCl_4$ as glass-forming raw materials to the burner which is arranged to form the core part to flame hydrolyze the supplied compounds to synthesize glass soot particles;

supplying $SiCl_4$ as the only glass-forming raw material to the burner which is arranged to form the non-core part of the preform to flame hydrolyze the supplied compound to synthesize glass soot particles;

in any event supplying $SiCl_4$ to the outer flame of the double-layer flame as the only glass raw material; and

depositing the generated glass soot particles on the lower end of a rotating starting member and growing the porous preform in a direction of an axis of the starting member to produce the porous preform comprising a core part containing at least partly $GeO_2$.

As result of extensive study for improving the conventional VAD method, it has been found that a surface layer having a high $GeO_2$ concentration is formed because of the phenomenon that undeposited $SiO_2$ particles and $GeO_2$ particles contained in a stream along the surface of the already formed porous preform react each other in the inner flame of the double-layer flame generated by the multi-port burner, and $GeO_2$ is contained in $SiO_2$ in the solid solution form.

Then, a measure for preventing diffusion of the stream of undeposited particles in the inner flame, namely a measure for forming a turbulent flow has been sought, and it has been found that it is effective to supply the glass-forming material to the outer flame in addition to the inner flame.

## BRIEF DESCRIPTION OF THE DRAWINGS

Fig. 1 schematically shows a conventional VAD method,
Fig. 2 is a cross sectional view of a multi-port
Fig. 3 schematically shows a preferred embodiment of the method of the present invention,
Fig. 4 shows the refractive index profile of an optical fiber fabricated from a preform which is produced by Example 1.

## DETAILED DESCRIPTION OF THE DRAWINGS

The present invention will be explained in detail by making reference to the accompanying drawings.

Fig. 3 schematically shows one embodiment of the method of the present invention. The same numerals stand for the same elements as in Fig. 1. Numeral 9 stands for an outer flame forming a soot stream, 12 stands for an inner flame forming a soot stream, and 15 stands for a multi-port burner for supplying glass-forming raw materials.

Although the outer flame forming a soot stream reaches the surface of an already deposited area of the porous preform, 70 % of said stream does not contribute to the deposition of the glass soot particles but acts to generate the turbulent flow.

As the glass-forming raw material, $SiCl_4$ and $GeCl_4$ are exemplified, although other compounds which are raw materials for known additives such as $TiCl_4$, $AlCl_3$, $PbCl_3$ and $POCl_3$ may be added to the glass-forming raw material.

In Fig.3, the first burner 18 for synthesizing the glass soot particles is used to form the center (core) part of the porous preform 11, while the second burner 15 is used for forming the peripheral part of the porous preform 11. One or both of the burners can be multi-port burners. For example, when the first burner 18 is a usual burner for generating a single flame and the second burner 15 is a multi-port burner for generating a double-layer flame, preferably, to the first burner 18, $SiCl_4$ and $GeCl_4$ are supplied as the glass-forming raw materials, and to the inner flame of the burner 15, $SiCl_4$ and $GeCl_4$ are supplied and to the outer flame of the burner 15, only $SiCl_4$ is supplied, or to the burner 18, $SiCl_4$ and $GeCl_4$ are supplied, and both to the outer and inner flames of the burner 15, only $SiCl_4$ is supplied.

In place of the cylindrical multi-port burner as shown in Fig. 2, a multi-port burner having other cross section such as a square or an ellipse may be used.

The supply rates of the glass forming materials can be easily determined by the person skilled in the art depending on the content of $GeO_2$ in the porous preform. Typical supply rates are explained in the following Examples.

The porous preform can be dehydrated and vitrified by conventional methods to give a transparent glass preform from which an optical fiber is drawn.

Preferred Embodiments of the Invention

The following Examples illustrate the method of the present invention.

Example 1

By using the apparatus as shown in Fig.3, and a four-port burner as the burner 18 for forming the core portion and an eight-port burner as the burner 15 for forming a cladding portion, a porous preform was produced.

To the first port 1 of the burner 18, $SiCl_4$, $GeCl_4$ and argon gas as a carrier gas were supplied at rates of 120 cc/min., 15 cc/min. and 180 cc/min., respectively.

To the second port 2 of the burner 18, hydrogen gas was supplied at a rate of 3.0 liter/min.

To the third port 3 of the burner 18, argon gas as a sealing gas was supplied at a rate of 2.0 liter/min.

To the fourth port 4 of the burner 18, oxygen gas was supplied at a rate of 5.0 liter/min.

To the first port 1 of the burner 15, $SiCl_4$, $GeCl_4$ and argon gas as a carrier gas were supplied at rates of 800 cc/min., 20 cc/min. and 800 cc/min., respectively.

To the second and sixth ports 2 and 6 of the burner 15, hydrogen gas was supplied at rates of 3.5 liter/min. and 40 liter/min., respectively.

To the fourth and eighth ports 4 and 8 of the burner 15, oxygen gas was supplied at rates of 17 liter/min. and 27 liter/min., respectively.

To the third, fifth and seventh ports 3, 5 and 7 of the burner 15, argon gas as a sealing gas was supplied at rates of 3 liter/min., 4 liter/min. and 4 liter/min., respectively.

Further, as the raw material for the outer flame, $SiCl_4$ and argon carrier gas were supplied to the sixth port 6 of the burner 15 at rates of 120 cc/min. and 100 cc/min., respectively.

Under the above conditions, the porous preform having a length of 500 mm was grown. The porous preform was heated and dehydrated in a carbon resistance furnace at 1000°C in an atmosphere of a $Cl_2$/helim mixture in a molar ratio of 0.01/1 and then vitrified at 1600°C in a helium atmosphere to give a transparent glass preform.

Observation of the surface of transparent glass preform revealed that no crack was formed on its surface.

Thereafter, the glass preform was drawn to a diameter of 5 mm and inserted in a pure $SiO_2$ tube made by the VAD method and having an outer diameter of 51 mm. From the outside of the tube, the composite was heated with a carbon resistance furnace to integrated them to give a preform for a 1.55 μm band dispersion shifted optical fiber. Then, the preform was drawn in a drawing furnace to fabricate an optical fiber. Its transmission loss was as low as 0.21 dB/km at a wavelength of 1.55 μm. A refractive index profile of the optical fiber is shown in Fig. 4.

Comparative Example 1

In the same manner as in Example 1 but supplying no $SiCl_4$ to the sixth port of the burner 15, the porous preform having a length of 500 mm was grown and vitrified. The surface layer of the transparent glass form was peeled off and no good preform was produced.

**Claims**

1. A method for producing a porous preform (11) for use in the fabrication of an optical fiber with at least two burners (15,18) for synthesizing glass soot particles at least one (15) of which generates a double-layer flame and at least one (18) of which is used for forming a core part of the preform; the method comprising the steps of:

supplying $SiCl_4$ and $GeCl_4$ as glass-forming raw materials to the burner (18) which is arranged to form the core part to flame hydrolyze the supplied compounds to synthesize glass soot particles;

supplying $SiCl_4$ as the only glass-forming raw material to the burner (15) which is arranged to form the peripheral part of the preform to flame hydrolyze the supplied compound to synthesize glass soot particles;

in any event supplying $SiCl_4$ to the outer flame (9) of the double-layer flame as the only glass raw material; and

depositing the generated glass soot particles on the lower end of a rotating starting member (10) and growing the porous preform (11) in a direction of an axis of the starting member to produce the porous preform comprising a core part containing at least partly $GeO_2$.

2. A method according to claim 1, wherein said burner (18) for forming said core part of said preform (11) is a burner which generates a single flame and said burner for generating the double-layer flame (15) is a multi-port burner producing inner (12) and outer (9) flames.

3. A method according to claim 2, wherein $SiCl_4$ and $GeCl_4$ are supplied as glass-forming raw materials to both said single flame burner (18) and the inner flame (12) of said multi-port burner (15), and $SiCl_4$ is supplied as the only glass-forming raw material to the outer flame (9) of said multi-port burner (15).

4. A method according to claim 2, wherein $SiCl_4$ and $GeCl_4$ are supplied as glass-forming raw materials to said single flame burner (18), and $SiCl_4$ is supplied as the only glass-forming raw material to both the inner (12) and outer (9) flame of said multi-port burner (15).


**Patentansprüche**

1. Ein Verfahren zur Herstellung einer porösen Vorform (11) zur Verwendung bei der Produktion einer optischen Faser mit mindestens zwei Brennern (15,18) für die Synthese von Glasrußpartikeln, von denen mindestens einer (15) eine zweischichtige Flamme erzeugt und zumindest einer (18) zur Bildung des Kernteils der Vorform verwendet wird, wobei das Verfahren folgende Schritte umfaßt:

Zuführung von $SiCl_4$ und $GeCl_4$ als glasbildende Rohmaterialien zu dem Brenner (18), der so angeordnet ist, daß, um den Kernteil zu bilden, die zugeführten Verbindungen einer Flammhydrolyse unterworfen werden, um Glasrußpartikel zu synthetisieren;

Zuführung von $SiCl_4$ als einziges glasbildendes Rohmaterial zu dem Brenner (15), der so angeordnet ist, daß, um den peripheren Teil der Vorform zu bilden, die zugeführte Verbindung einer Flammhydrolyse unterworfen wird, um Glasrußpartikel zu synthetisieren;

für jeden Fall Zuführung von $SiCl_4$ zu der äußeren Flamme (9) der zweischichtigen Flamme als einziges Glasrohmaterial;

und Niederschlagung der erzeugten Glasrußpartikel an dem unteren Ende eines rotierenden Ausgangsstabs (10) und Wachsen der porösen Vorform (11) in der Richtung der Achse des Ausgangsstabs, um die poröse Vorform mit einem Kernteil, der zumindest teilweise $GeO_2$ enthält, herzustellen.

2. Ein Verfahren gemäß Anspruch 1, worin der genannte Brenner (18) zur Bildung des Kernteils der genannten Vorform (11) ein Brenner ist, der eine einzige Flamme erzeugt, und der genannte Brenner zur Erzeugung einer zweischichtigen Flamme (15) ein Mehrfachbrenner ist, der innere (12) und äußere (9) Flammen erzeugt.

3. Ein Verfahren gemäß Anspruch 2, worin $SiCl_4$ und $GeCl_4$ als glasbildende Rohmaterialien sowohl dem genannten Brenner (18) mit einer einzigen Flamme als auch der der inneren Flamme (12) des genannten Mehrfachbrenners (15) zugeführt werden, und $SiCl_4$ als einziges glasbildendes Rohmaterial der äußeren Flamme (9) des genannten Mehrfachbrenners (15) zugeführt wird.

4. Ein Verfahren gemäß Anspruch 2, worin $SiCl_4$ und $GeCl_4$ als glasbildende Rohmaterialien dem genannten Brenner (18) mit einer einzigen Flamme zugeführt werden und $SiCl_4$ als einziges glasbildendes Rohmaterial sowohl der inneren (12) als auch der äußeren (9) Flamme des genannten Mehrfachbrenners (15) zugeführt wird.

**Revendications**

1. Procédé de fabrication d'une préforme poreuse (11) destinée à une utilisation lors de la fabrication d'une fibre optique à l'aide d'au moins deux brûleurs (15, 18) pour synthétiser des particules de suie de verre, dont au moins un (15) génère une flamme double flux et dont au moins un (18) est utilisé pour former une partie d'âme de la préforme, le procédé comprenant les étapes de :

application de $SiCl_4$ et de $GeCl_4$ en tant que matériaux de base de formation de verre au brûleur (18) qui est agencé pour former la partie d'âme afin d'hydrolyser à la flamme les composés appliqués afin de synthétiser des particules de suie de verre ;

application de $SiCl_4$ en tant que seule matériau de base de formation de verre au brûleur (15) qui est agencé pour former la partie périphérique de la préforme afin d'hydrolyser à la flamme le composé appliqué afin de synthétiser des particules de suie de verre ;

quel que soit le cas, application de $SiCl_4$ dans la flamme externe (9) de la flamme double flux en tant que seul matériau de base de formation de verre ; et

dépôt des particules de suie de verre générées sur l'extrémité inférieure d'un élément de démarrage tournant (10) et croissance de la préforme poreuse (11) suivant la direction d'un axe de l'élément de démarrage afin de produire la préforme poreuse comprenant une partie d'âme contenant au moins partiellement du $GeO_2$.

2. Procédé selon la revendication 1, dans lequel ledit brûleur (18) pour former ladite partie d'âme de ladite préforme (11) est un brûleur qui génère une unique flamme et ledit brûleur pour générer la flamme double flux (15) est un brûleur multi-orifices qui produit des flammes interne (12) et externe (9).

3. Procédé selon la revendication 2, dans lequel du $SiCl_4$ et du $GeCl_4$ sont appliqués en tant que matériaux de base de formation de verre à la fois audit brûleur à flamme unique (18) et dans la flamme interne (12) dudit brûleur multi-orifices (15) et du $SiCl_4$ est appliqué en tant que seul matériau de base de formation de verre dans la flamme externe (9) dudit brûleur multi-orifices (15).

4. Procédé selon la revendication 2, dans lequel du $SiCl_4$ et du $GeCl_4$ sont appliqués en tant que matériaux de base de formation de verre audit brûleur à flamme unique (18) et du $SiCl_4$ est appliqué en tant que seul matériau de base de formation de verre à la fois dans la flamme interne (12) et dans la flamme externe (9) dudit brûleur multi-orifices (15).

# Fig.1
Prior Art

# Fig.2

# Fig.4

$GeO_2 - SiO_2$

$\Delta n = 0.95\%$

Refractive index of pure $SiO_2$

$\Delta n = 0.15\%$

# Fig.3